(19) Europäisches Patentamt / European Patent Office / Office européen des brevets

(11) **EP 4 343 675 A1**

(12) **EUROPEAN PATENT APPLICATION**
published in accordance with Art. 153(4) EPC

(43) Date of publication:
**27.03.2024 Bulletin 2024/13**

(51) International Patent Classification (IPC):
**G06T 3/40** $^{(2024.01)}$

(21) Application number: **21940442.3**

(22) Date of filing: **24.09.2021**

(86) International application number:
**PCT/CN2021/120171**

(87) International publication number:
**WO 2022/241995 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2021 CN 202110541938**

(71) Applicant: **Opt Machine Vision Tech Co., Ltd. Dongguan, Guangdong 523000 (CN)**

(72) Inventors:
- **JIN, Longcun**
  **Chang'an Town Dongguan, Guangdong 523000 (CN)**
- **LU, Shenglin**
  **Chang'an Town Dongguan, Guangdong 523000 (CN)**

(74) Representative: **Zacco Sweden AB**
**P.O. Box 5581**
**Löjtnantsgatan 21**
**114 85 Stockholm (SE)**

(54) **VISUAL IMAGE ENHANCEMENT GENERATION METHOD AND SYSTEM, DEVICE, AND STORAGE MEDIUM**

(57) Provided are a method and system for generating visual image enhancement, an apparatus, and a storage medium. The method includes acquiring a to-be-processed low-resolution image; processing the low-resolution image through an image super-resolution model to output a high-resolution image; collecting training samples, where the training samples include high-resolution image samples and low-resolution image samples; and establishing the image super-resolution model according to the collected training samples and based on a preset loss function and the high-resolution image samples. Through the trained image super-reso-

lution model, multi-scale sub-networks are used to extract the information with different frequencies from the low-resolution image so that the output high-resolution image includes more image details, improving the clarity of an image, avoiding using a single-scale convolution neural network to simultaneously perform the feature extraction of the low-frequency and high-frequency information of the image , and overcoming the deficiency that a textured area is excessively smooth and has a poor visual effect. The method can be widely applied in the field of image processing technology.

EP 4 343 675 A1

```
                    ┌──────────────────────────────┐
                    │ Collect training samples, where │ S3
                    │ the training samples include high-│
                    │ resolution image samples and low-│
                    │ resolution image samples        │
                    └──────────────────────────────┘
                                    │
┌──────────────────────────┐       ▼
│ Acquire a to-be-processed │ S1   ┌──────────────────────────────┐
│ low-resolution image      │      │ Establish the image super-     │ S4
└──────────────────────────┘      │ resolution model according to the│
            │                      │ collected training samples and  │
            │                      │ based on a preset loss function and│
            ▼                      │ the high-resolution image samples│
┌──────────────────────────┐      └──────────────────────────────┘
│ Process the low-resolution │ S2
│ image through an image super-│
│ resolution model to output a│
│ high-resolution image       │
└──────────────────────────┘
```

**FIG. 1**

**Description**

The present application claims priority to Chinese Patent Application No. 202110541938.4, entitled "method and system for generating visual image enhancement, apparatus, and storage medium" and filed with the China National Intellectual Property Administration (CNIPA) on May 18, 2021, the disclosure of which is incorporated herein by reference in its entirety.

TECHNICAL FIELD

The present invention belongs to the field of image processing technology and, in particular, to a method and system for generating visual image enhancement, an apparatus, and a storage medium.

BACKGROUND

Single-image super-resolution is designed to estimate a high-resolution image from single low-resolution images and has been studied for decades in industry and academia. Up to now, single-image super-resolution has been widely applied in various fields including remote sensing, medical imaging, and image monitoring. However, single-image super-resolution is a well-known challenging ill-posed problem, because a specific low-resolution image may correspond to many plausible high-resolution images. In order to solve this problem, many single-image super-resolution methods have been proposed, among which methods based on convolution neural networks have achieved excellent performance because of their powerful representation ability.

In recent years, several methods based on convolution neural networks have explored different network architectures for single-image super-resolution and made great progress in the accuracy of re-establishment. However, low-frequency information and high-frequency information are re-established by using a single-scale network, making such methods suffer from over-smoothing to different degrees in textured areas. For the single-image super-resolution, the low-frequency information and high-frequency information of a super-resolution image are affected not only by network depth but also by feature scale. A relatively-deep network has a relatively-large receptive field to extract global low-frequency semantic information, while a relatively-shallow network has a relatively-small receptive field and focuses on local areas containing more high-frequency information. For the scale of features, a large-scale feature contains more pixels and high-frequency information than a small-scale feature. In other words, the large-scale feature can better reflect a region where a frequency or signal changes rapidly.

A key challenge of the single-image super-resolution is that low-frequency information and high-frequency information cannot be re-established well simultaneously, thereby making the single-image super-resolution prone to an error and unable to generate an optimal super-resolution result. Therefore, a more accurate and efficient single-image super-resolution network is needed to further improve the restoration ability of the single-image super-resolution so that the high-frequency information and the low-frequency can be re-established well simultaneously and super-resolution images with higher quality can be generated.

SUMMARY

An object of the present invention is to provide a method and system for generating visual image enhancement, an apparatus, and a storage medium to solve the preceding technical problem.

To achieve this object, the present invention adopts the technical solutions below.

In a first aspect, a method for generating visual image enhancement is provided and includes the steps below.

A to-be-processed low-resolution image is acquired.

The low-resolution image is processed through an image super-resolution model to output a high-resolution image.

A method for training the image super-resolution model includes the steps: training samples are collected, where the training samples include high-resolution image samples and low-resolution image samples; and the image super-resolution model is established according to the collected training samples and based on a preset loss function and the high-resolution image samples.

Optionally, the step in which the training samples are collected, where the training samples include the high-resolution image samples and the low-resolution image samples, includes the steps below.

The high-resolution image samples are obtained through a random cutting method and are backed up.

The high-resolution image samples are down-sampled through an image scaling algorithm to generate the low-resolution image samples.

Optionally, the step in which the image super-resolution model is established according to the collected training samples and based on the preset loss function and the high-resolution image samples includes the steps below.

A set number of low-resolution image samples are acquired.

A feature is extracted from the low-resolution image based on a convolution layer to generate a shallow feature of the image.

Spatial attention residual dense connection blocks are used to fuse the shallow feature and extract feature information with a specific frequency.

All feature information with different frequencies extracted in a previous stage by the spatial attention residual dense connection blocks are fused based on adaptive sub-network fusion modules.

The spatial attention residual dense connection blocks and the adaptive sub-network fusion modules are combined based on multi-scale sub-networks to generate feature information of different scales, and a deep feature fused with information with multiple frequencies is output.

The shallow feature is transmitted to the deep feature fused with the information with multiple frequencies by using a skip connection, and sub-pixel convolution is combined to output an up-sampling feature.

The up-sampling feature is converted from a feature space to an sRGB color space by using the convolution layer to re-establish the high-resolution image.

A reverse convergence is performed on the re-established high-resolution image and the backup high-resolution image samples based on the preset loss function to establish the image super-resolution model.

Optionally, the multi-scale sub-networks are provided with three sub-networks of different scales. The sub-networks of different scales from small scale to large scale are provided with five spatial attention residual dense connection blocks and several adaptive sub-network fusion modules, seven spatial attention residual dense connection blocks and several adaptive sub-network fusion modules, and three spatial attention residual dense connection blocks separately and several adaptive sub-network fusion modules. Optionally, the spatial attention residual dense connection block is provided with three spatial attention residual dense connection units.

Optionally, the step in which the partial attention residual dense connection blocks are used to fuse the shallow feature and extract the feature information with the specific frequency includes the steps below.

The spatial attention residual dense connection units output a residual dense feature based on a dense connection and a residual connection.

A weight in a spatial dimension is adaptively adjusted based on a spatial attention mechanism, and high-frequency information of the residual dense feature and redundant low-frequency information of the residual dense feature are spatially distinguished.

An input feature of the spatial attention residual dense connection units is accessed to an output feature of the spatial attention residual dense connection units by a partial skip connection to output the feature information with the specific frequency.

Optionally, the step in which all the feature information with the different frequencies extracted in the previous stage by the spatial attention residual dense connection blocks are fused based on the adaptive sub-network fusion modules includes the steps below.

Interpolation scaling is used to determine feature mapping having a same scale as required features and features of different scales.

A weight matrix is adaptively determined through an attention mechanism according to the feature mapping.

The weight matrix is divided into weight components, and the weight components are multiplied by the feature mapping to fuse the feature information with the different frequencies.

Optionally, the step in which the spatial attention residual dense connection blocks and the adaptive sub-network fusion modules are combined based on the multi-scale sub-networks to generate the feature information of the different scales and in which the deep feature fused with information with the multiple frequencies is output includes the steps below.

The small-scale feature obtained by down-sampling the shallow feature is processed through three stages to output a small-scale low-frequency feature.

The adaptive sub-network fusion modules fuse the shallow feature and an output of one of the sub-networks in the first stage to output a frequency feature having a same scale as the shallow feature through fusion in two stages.

Outputs of the sub-networks in the second stage are combined to output a large-scale high-frequency feature through fusion in one stage.

The adaptive sub-network fusion modules fuse three features of different scales to output a deep feature that has a same scale as a largest-scale feature and is fused with information with different frequencies.

In a second aspect, a system for generating visual image enhancement is provided. The system includes an acquisition module, an output module, and a training module.

The acquisition module is configured to acquire a to-be-processed low-resolution image.

The output module is configured to process the low-resolution image through an image super-resolution model to output a re-established high-resolution image, where the image super-resolution model is based on high-resolution image samples and low-resolution image samples.

The training module is configured to train the image super-resolution model and includes a sampling sub-module and a model establishment sub-module.

The sampling sub-module is configured to collect training samples, where the training samples include high-resolution image samples and low-resolution image samples.

The model establishment sub-module is configured to establish the image super-resolution model according to the collected training samples and based on a preset loss function and the high-resolution image samples.

Optionally, the sampling sub-module includes a first sampling unit and a second sampling unit.

The first sampling unit is configured to obtain the high-resolution image samples through a random cutting method and back up the high-resolution image samples.

The second sampling unit is configured to down-sample the high-resolution image samples through an image scaling algorithm to generate the low-resolution image samples.

Optionally, the model establishment sub-module includes an acquisition unit, a generation unit, an extraction unit, a fusion unit, an output unit, an up-sampling unit, a re-establishment unit, and a model establishment unit.

The acquisition unit is configured to acquire a set number of low-resolution image samples.

The generation unit is configured to extract a feature from the low-resolution image based on a convolution layer to generate a shallow feature of the image.

The extraction unit is configured to use spatial attention residual dense connection blocks to fuse the shallow feature and extract feature information with a specific frequency.

The fusion unit is configured to fuse, based on adaptive sub-network fusion modules, all feature information with different frequencies extracted in a previous stage by the spatial attention residual dense connection blocks.

The output unit is configured to combine, based on multi-scale sub-networks, the spatial attention residual dense connection blocks and the adaptive sub-network fusion modules to generate feature information of different scales and output a deep feature fused with information with multiple frequencies.

The up-sampling unit is configured to transmit the shallow feature to the deep feature fused with the information with multiple frequencies by using a skip connection and combine sub-pixel convolution to output an up-sampling feature.

The re-establishment unit is configured to convert the up-sampling feature from a feature space to an sRGB color space by using the convolution layer to re-establish the high-resolution image.

The model establishment unit is configured to perform a reverse convergence on the re-established high-resolution image and the backup high-resolution image samples based on the preset loss function to establish the image super-resolution model.

Optionally, the multi-scale sub-networks are provided with three sub-networks of different scales. The sub-networks of different scales from small to large are provided with five spatial attention residual dense connection blocks and several adaptive sub-network fusion modules, seven spatial attention residual dense connection blocks and several adaptive sub-network fusion modules, and three spatial attention residual dense connection blocks separately and several adaptive sub-network fusion modules. The spatial attention residual dense connection block is provided with three spatial attention residual dense connection units.

The extraction unit includes a first extraction sub-unit, a second extraction sub-unit, and a first output sub-unit.

The first extraction sub-unit is configured to output, by the spatial attention residual dense connection units, a residual dense feature based on a dense connection and a residual connection.

The second extraction sub-unit is configured to adaptively adjust a weight in a spatial dimension based on a spatial attention mechanism and spatially distinguish high-frequency information of the residual dense feature and redundant low-frequency information of the residual dense feature.

The first output sub-unit is configured to access an input feature of the spatial attention residual dense connection units to an output feature of the spatial attention residual dense connection units by a partial skip connection to output the feature information with the specific frequency.

Optionally, the fusion unit includes a first determination sub-unit, a second determination sub-unit, and a first fusion sub-unit.

The first determination sub-unit is configured to use interpolation scaling to determine feature mapping having a same scale as required features and features of different scales.

The second determination sub-unit is configured to adaptively determine a weight matrix through an attention mechanism according to the feature mapping.

The first fusion sub-unit is configured to divide the weight matrix into weight components and multiply the weight components by the feature mapping to fuse the feature information with the different frequencies.

Optionally, the output unit includes a second output sub-unit, a third output sub-unit, a fourth output sub-unit, and a second fusion sub-unit.

The second output sub-unit is configured to output a small-scale low-frequency feature by processing a small-scale feature obtained by down-sampling the shallow feature through three stages.

The third output sub-unit is configured to fuse, by the adaptive sub-network fusion modules, the shallow feature and an output of the sub-network in the first stage, and outputting a frequency feature having a same scale as the shallow feature through fusion in two stages.

The fourth output sub-unit is configured to combine outputs of the sub-networks in the second stage to output a large-scale high-frequency feature through fusion in one stage.

The second fusion sub-unit is configured to fuse, by the adaptive sub-network fusion modules, three features of different scales to output a deep feature that has a same scale as a largest-scale feature and is fused with information with different frequencies.

In a third aspect, an apparatus is provided. The apparatus includes

a memory configured to store at least one program and

a processor configured to execute the at least one program so as to implement the preceding method for generating visual image enhancement.

In a fourth aspect, a storage medium is provided. The storage medium stores an executable program. When the executable program is executed by a processor, the preceding method for generating visual image enhancement is performed.

Compared with the existing art, embodiments of the present invention have the beneficial effects described below.

Resolution processing is performed on the acquired to-be-processed low-resolution image by using the image training model established based on the preset loss function and the training samples including the high-resolution training samples and the low-resolution training samples, accurately and efficiently achieving the effect of restoring the high-resolution image from the low-resolution image, avoiding using a single-scale convolution neural network to simultaneously perform the feature extraction of the low-frequency and high-frequency information of the image, and overcoming the deficiency that a textured area is excessively smooth and has a poor visual effect.

BRIEF DESCRIPTION OF DRAWINGS

To illustrate the technical solutions in embodiments of the present invention or the related art more clearly, the drawings used in the description of the embodiments or the related art are briefly described below. Apparently, the drawings described below illustrate only part of the embodiments of the present invention, and those of ordinary skill in the art may obtain other drawings based on the drawings described below on the premise that no creative work is done.

The structure, ratio, size, and the like shown in this specification are only used to match the content disclosed in the specification for the understanding and reading of those skilled in the art and are not used to limit the conditions under which the present invention can be implemented, so they have no technical significance. Any modification in the structure, any change in the ratio relationship, or any adjustment in the size should still fall within the scope of the technical content disclosed in the present invention without affecting the efficacy and purpose that can be achieved by the present invention.

FIG. 1 is a flowchart of steps of a method for generating visual image enhancement according to an embodiment of the present invention.

FIG. 2 is a block diagram of a system for generating visual image enhancement according to an embodiment of the present invention.

FIG. 3 is a flowchart of an image super-resolution model based on multi-scale sub-networks according to an embodiment of the present invention.

FIG. 4 is a diagram of operation details of spatial attention residual dense connection blocks in the extracted feature information according to an embodiment of the present invention.

FIG. 5 is a diagram of operation details of adaptive sub-network fusion modules in feature fusion according to an embodiment of the present invention.

FIG. 6 is a structural diagram of multi-scale sub-networks fused with the information with multiple frequencies according to an embodiment of the present invention.

## DETAILED DESCRIPTION

To make the purposes, features, and advantages of the present invention more apparent and easier to understand, the technical solutions in the embodiments of the present invention are described clearly and completely in conjunction with the drawings in the embodiments of the present invention. Apparently, the embodiments described below are part, not all, of the embodiments of the present invention. Based on the embodiments of the present invention, all other embodiments obtained by those of ordinary skill in the art are within the scope of the present invention on the premise that no creative work is done.

Embodiment one

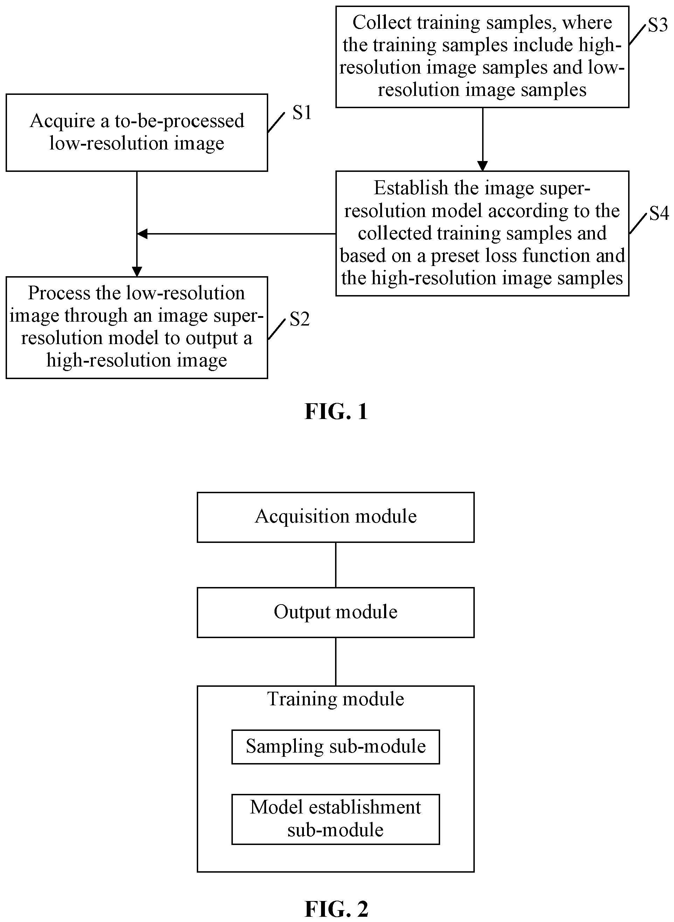

As shown in FIG. 1, this embodiment provides a method for generating visual image enhancement. The method includes the steps below.

In S1, a to-be-processed low-resolution image is acquired. The low-resolution image includes images with different color content.

In S2, the low-resolution image is processed through an image super-resolution model to output a high-resolution image.

A method for training the image super-resolution model includes the steps below.

In S3, training samples are collected, where the training samples include high-resolution image samples and low-resolution image samples.

In S4, the image super-resolution model is established according to the collected training samples and based on a preset loss function and the high-resolution image samples.

Optionally, step S3 includes the steps below.

In S31, the high-resolution image samples are collected. The high-resolution image samples are obtained through a random cutting method, and are backed up.

In S32, the high-resolution image samples are down-sampled through an image scaling algorithm to generate the low-resolution image samples.

The high-resolution image samples and the low-resolution image samples may be acquired through steps S31 and S32 so as to establish the training samples.

Optionally, step S4 includes the steps below.

In S41, a set number of low-resolution image samples are acquired.

In S42, a feature is extracted from the low-resolution image based on a convolution layer to generate a shallow feature of the low-resolution image.

In S43, spatial attention residual dense connection blocks are used to fuse the shallow feature to extract the feature information with a specific frequency.

In S44, all feature information with different frequencies extracted in the previous stage by the spatial attention residual dense connection blocks are fused based on adaptive sub-network fusion modules.

In S45, the spatial attention residual dense connection blocks and the adaptive sub-network fusion modules are combined based on multi-scale sub-networks to generate the feature information of different scales and output a deep feature fused with information with multiple frequencies.

In S46, the shallow feature is transmitted to the deep feature fused with the information with multiple frequencies based on a skip connection to combine with sub-pixel convolution to output an up-sampling feature.

In S47, the up-sampling feature is converted from a feature space to an sRGB color space by using the convolution layer to re-establish the high-resolution image.

In S48, a reverse convergence is performed on the re-established high-resolution image and the backup high-resolution image samples based on the preset loss function to establish the image super-resolution model.

Optionally, the multi-scale sub-networks are provided with three sub-networks of different scales. The sub-networks of different scales from small scale to large scale are provided with five spatial attention residual dense connection blocks and several adaptive sub-network fusion modules, seven spatial attention residual dense connection blocks and several adaptive sub-network fusion modules, and three spatial attention residual dense connection blocks separately and several adaptive sub-network fusion modules. Optionally, the spatial attention residual dense connection block is provided with three spatial attention residual dense connection units.

Step S43 includes the steps below.

In S431, the spatial attention residual dense connection units output a residual dense feature based on a dense connection and a residual connection.

In S432, a weight is adaptively adjusted in a spatial dimension based on a spatial attention mechanism to spatially distinguish the high-frequency information of the residual dense feature and the redundant low-frequency information of the residual dense feature.

In S433, an input feature of the spatial attention residual dense connection units is accessed to an output feature of the spatial attention residual dense connection units by a partial skip connection to output the feature information with the specific frequency feature.

Optionally, step S44 includes the steps below.

In S441, interpolation scaling is used to determine the feature mapping having the same scale as a required feature and features of different scales.

In S442, a weight matrix is adaptively determined through an attention mechanism according to the feature mapping.

In S443, the weight matrix is divided into weight components, and the weight components are multiplied by the feature mapping to fuse the feature information with different frequencies.

Optionally, step S45 includes the steps below.

In S451, the small-scale features obtained by down-sampling the shallow feature are processed through three stages to output a small-scale low-frequency feature.

In S452, the adaptive sub-network fusion modules fuse the shallow feature and an output of the sub-network in the first stage, and output a frequency feature having the same scale as the shallow feature through fusion in two stages.

In S453, outputs of the sub-networks in the second stage are combined to output a large-scale high-frequency feature through fusion in one stage.

In S454, the adaptive sub-network fusion modules fuse three features of different scales to output a deep feature that has the same scale as the largest-scale feature and is fused with the information with different frequencies.

Embodiment two

As shown in FIG. 2, this embodiment provides a system for generating visual image enhancement. The system includes an acquisition module, an output module, and a training module

The acquisition module is configured to acquire a to-be-processed low-resolution image.

The output module is configured to process the low-resolution image through an image super-resolution model to output a reconstructed high-resolution image, where the image super-resolution model is based on high-resolution image samples and low-resolution image samples.

The training module is configured to train the image super-resolution model and includes a sampling sub-module and a model establishment sub-module.

The sampling sub-module is configured to collect training samples, where the training samples include high-resolution image samples and low-resolution image samples.

The model establishment sub-module is configured to establish the image super-resolution model according to the collected training samples and based on a preset loss function and the high-resolution image samples.

Optionally, the sampling sub-module includes a first sampling unit and a second sampling unit.

The first sampling unit is configured to obtain the high-resolution image samples through a random cutting method and back up the high-resolution image samples.

The second sampling unit is configured to down-sample the high-resolution image samples through an image scaling algorithm to generate the low-resolution image samples.

The high-resolution image samples and the low-resolution image samples may be acquired through the first sampling unit and the second sampling unit so as to establish the training samples.

Optionally, the model establishment sub-module includes an acquisition unit, a generation unit, an extraction unit, a fusion unit, an output unit, an up-sampling unit, a re-establishment unit, and a model establishment unit.

The acquisition unit is configured to acquire a set number of low-resolution image samples.

The generation unit is configured to extract a feature from the low-resolution image based on a convolution layer to generate a shallow feature of the image.

The extraction unit is configured to use spatial attention residual dense connection blocks to fuse the shallow feature and extract the feature information with a specific frequency.

The fusion unit is configured to fuse, based on adaptive sub-network fusion modules, all feature information with different frequencies extracted in the previous stage by the spatial attention residual dense connection blocks.

The output unit is configured to combine, based on multi-scale sub-networks, the spatial attention residual dense connection blocks and the adaptive sub-network fusion modules to generate the feature information of different scales and output a deep feature fused with the information with multiple frequencies.

The up-sampling unit is configured to use a skip connection to transmit the shallow feature to the deep feature fused with the information with multiple frequencies and combine sub-pixel convolution to output an up-sampling feature.

The re-establishment unit is configured to convert the up-sampling feature from a feature space to an sRGB color space by using the convolution layer to re-establish the high-resolution image.

The model establishment unit is configured to perform a reverse convergence on the re-established high-resolution image and the backup high-resolution image samples based on the preset loss function to establish the image super-resolution model.

Optionally, the multi-scale sub-networks are provided with three sub-networks of different scales. The sub-networks of different scales from small scale to large scale are provided with five spatial attention residual dense connection blocks and several adaptive sub-network fusion modules, seven spatial attention residual dense connection blocks and several adaptive sub-network fusion modules, and three spatial attention residual dense connection blocks separately and several adaptive sub-network fusion modules. The spatial attention residual dense connection block is provided with three spatial attention residual dense connection units. The extraction unit includes a first extraction sub-unit, a second extraction sub-unit, and a first output sub-unit.

The first extraction sub-unit is configured to output, by the spatial attention residual dense connection units, a residual dense feature based on a dense connection and a residual connection. The second extraction sub-unit is configured to adaptively adjust a weight in a spatial dimension based on a spatial attention mechanism to spatially distinguish the high-frequency information of the residual dense feature and the redundant low-frequency information of the residual dense feature.

The first output sub-unit is configured to access an input feature of the spatial attention residual dense connection units to an output feature of the spatial attention residual dense connection units by a partial skip connection to output the feature information with the specific frequency.

Optionally, the fusion unit includes a first determination sub-unit, a second determination sub-unit, and a first fusion sub-unit.

The first determination sub-unit is configured to use interpolation scaling to determine the feature mapping having the same scale as a required feature and features of different scales.

The second determination sub-unit is configured to adaptively determine a weight matrix through an attention mechanism according to the feature mapping.

The first fusion sub-unit is configured to divide the weight matrix into weight components and multiply the weight components by the feature mapping to fuse the feature information with different frequencies.

Optionally, the output unit includes a second output sub-unit, a third output sub-unit, a fourth output sub-unit, and a second fusion sub-unit.

The second output sub-unit is configured to output a small-scale low-frequency feature by processing the small-scale features obtained by down-sampling the shallow feature through three stages.

The third output sub-unit is configured to fuse, by the adaptive sub-network fusion modules, the shallow feature and an output of one of the sub-networks in the first stage, and output a frequency feature having the same scale as the shallow feature through fusion in two stages.

The fourth output sub-unit is configured to combine outputs of the sub-networks in the second stage to output a large-scale high-frequency feature through fusion in one stage.

The second fusion sub-unit is configured to fuse, by the adaptive sub-network fusion modules, three features of different scales to output a deep feature that has the same scale as the largest-scale feature and is fused with information with different frequencies.

Embodiment three

This embodiment provides an apparatus. The apparatus includes at least one processor and at least one memory configured to store at least one program.

When the at least one program is executed by the at least one processor, the at least one processor is caused to perform steps of the method for generating visual image enhancement as described in the preceding embodiment one.

Embodiment four

A storage medium is provided. The storage medium stores a program executable by a processor. When the processor-executable program is executed by the processor, steps of the method for generating visual image enhancement as described in embodiment one are performed.

Example five

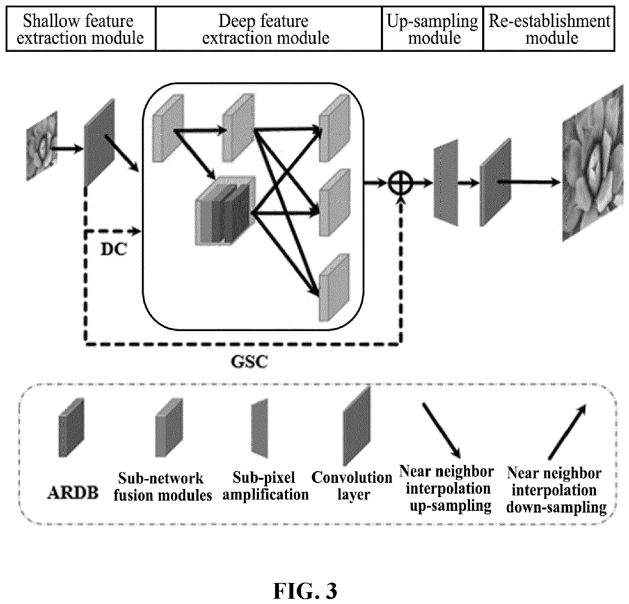

Referring to FIGS. 3 to 6, a flowchart of a method for generating visual image enhancement provided in this embodiment may serve as a specific implementation of embodiment one or may implement the process of this method through the system in embodiment two. The method specifically includes the steps below.

In A, training samples are collected, where the training samples include high-resolution image samples and low-resolution image samples.

In B, an image super-resolution model is established according to the collected training samples.

In C, a to-be-processed low-resolution image is acquired.

In D, the to-be-processed low-resolution image is processed through the image super-resolution model to output a high-resolution image.

A specific implementation of step A is as below.

In A1, a public large-scale image data set DIV2K is acquired as a training data set. The data set includes multiple images with different color content so that the trained image super-resolution model has better generalization capability. The data set is composed of 800 training samples.

In A2, the high-resolution image samples are backed up by using an image scaling algorithm such as an imresize function in MATLAB, and then four-times bicubic down-sampling is performed on the high-resolution image samples to obtain the corresponding low-resolution image samples; the backup high-resolution image samples and the low-resolution image samples generated through sampling form pairs of training samples. And horizontal or vertical flipping, 90° rotation and the random cutting of image blocks are used as data enhancement methods.

A specific implementation of step B is as below.

In B 1, a single low-resolution image sample is selected, and then the single low-resolution image sample is cut randomly to obtain a $64 \times 64$ image block as input image and denoted as $I_{LR}$.

In B2, shallow feature extraction is performed on the input image $I_{LR}$ by using a convolution layer.

It may be understood that a feature extracted by the feature extraction module $H_{SF}$ contains 64 channels, and the size of the obtained feature is the same as the size of the input image. The convolution layer is a $3 \times 3$ convolution layer. The feature extracted by the feature extraction module may be expressed by using the formula below.

$$F_{sf} = H_{SF}\left(I_{LR}\right)$$

In B3, spatial attention residual dense connection blocks fuse a shallow feature $F_{sf}$ and extract the feature information with a specific frequency.

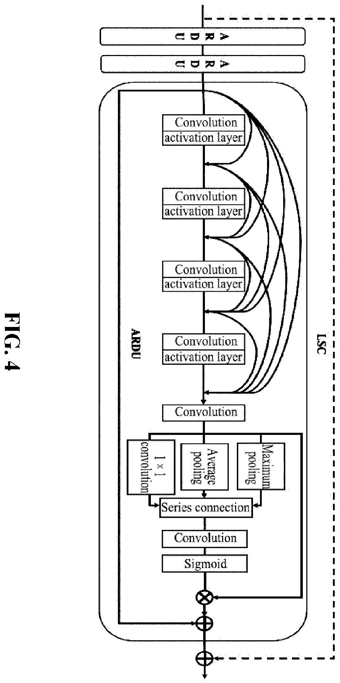

Referring to FIG. 4, the spatial attention residual dense connection blocks include three spatial attention residual dense connection units $H_{ARDU}$. The spatial attention residual dense connection units firstly output a residual dense feature $F_{rd}$ through a dense connection and residual connection composed of five $3 \times 3$ convolution layers and five LeakyRelu activation functions, with the number of internal channel growth being set to 32. One $3 \times 3$ convolution layer is used to compress the number of channels to 64. Maximum pooling operation, average pooling operation and $1 \times 1$ convolution operation are performed in parallel, which are denoted as **Conv1×1**, **MaxPool**, and **AvgPool** respectively, so as to generate various feature maps which are represented as $F_{sa1}$, $F_{sa2}$, and $F_{sa3}$ respectively.

$$F_{sa1} = Conv_{1\times1}\left(F_{rd}\right)$$

$$F_{sa2} = MaxPool\left(F_{rd}\right)$$

$$F_{sa3} = AvgPool\left(F_{rd}\right)$$

Three groups of features are combined in series on the channels and then are compressed into a single-channel attention weight feature $F_{sa}$ through a $1 \times 1$ convolution. The process may be expressed as below.

$$F_{sa} = Conv\,1\times1\left(Concat\left(F_{sa1}, F_{sa2}, F_{sa3}\right)\right)$$

After Sigmoid normalization, a spatial weight is obtained. The weight is multiplied with a feature map $F_{rd}$ to adjust an implication value of the feature map. The high-frequency information of the residual dense feature and the redundant low-frequency information of the residual dense feature are distinguished spatially. An input feature $F_{uin}$ of the spatial attention residual dense connection units is accessed to an output feature of the spatial attention residual dense connection units by a skip connection.

The process may be expressed as below.

$$F_{ardu} = Sigmoid\left(F_{sa}\right) \otimes F_{ra} + F_{uin}$$

An input feature $F_{bin}$ of the spatial attention residual dense connection blocks is accessed to an output feature of the spatial attention residual dense connection blocks by a partial skip connection. The process may be expressed as below.

$$F_{ardb} = H_{ARDU}\left(H_{ARDU}\,H_{ARDU}\left((F_{bin})\right)\right) + F_{bin}$$

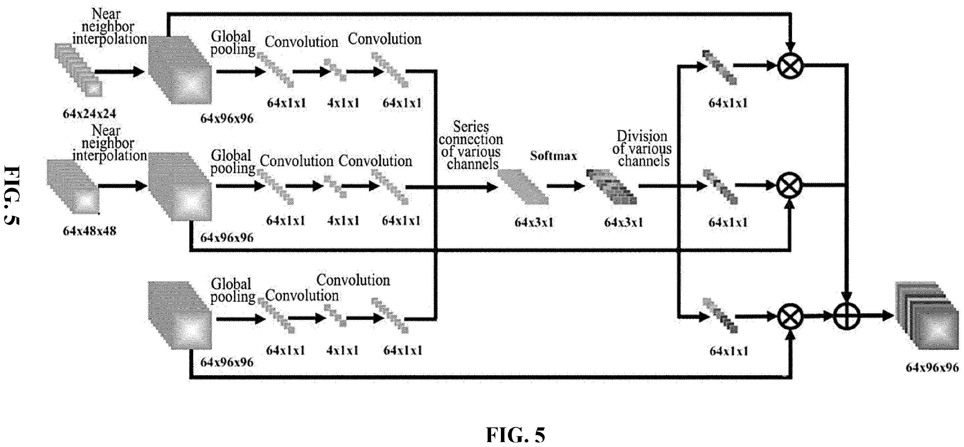

In B4, referring to FIG. 5, the nearest neighbor interpolation is used to interpolate small-scale feature mapping so as to generate the feature mapping having the same scale as the required scale features. The interpolated feature mapping is transferred to a globally-average pooling layer, a channel compression convolution layer, and a channel expansion convolution layer. The coefficient of a compression channel is that r = 16. Vectors with the same number of fusion features and with the size of 64 × 1 × 1 are connected in series, and a weight matrix is adaptively determined by using a softmax function on the same channel to generate a weight matrix with the size of 64 × 3 × 1. The weight matrix is divided into weight components with the same number as to-be-fused feature maps. The weight matrix is divided into a corresponding number of weight components corresponding to a corresponding number of sub-networks and with the size of 64 × 1 × 1 and then is divided into a corresponding number of attention vectors of a corresponding number of sub-networks with the size of 64 × 1 × 1. After the interpolated feature mapping is multiplied by the corresponding weight components, a corresponding number of feature maps are weighted and summed so as to obtain the fused output.

The $V_r$ and $F_r$ denote weight components and interpolation features of different sub-networks respectively. The number of channels of the to-be-fused feature-map is denoted as n. The output of fusion blocks is $F_{fb}$. The process may be expressed as below.

$$F_{fb} = \sum_{r=1}^{n} v_r \otimes F_r$$

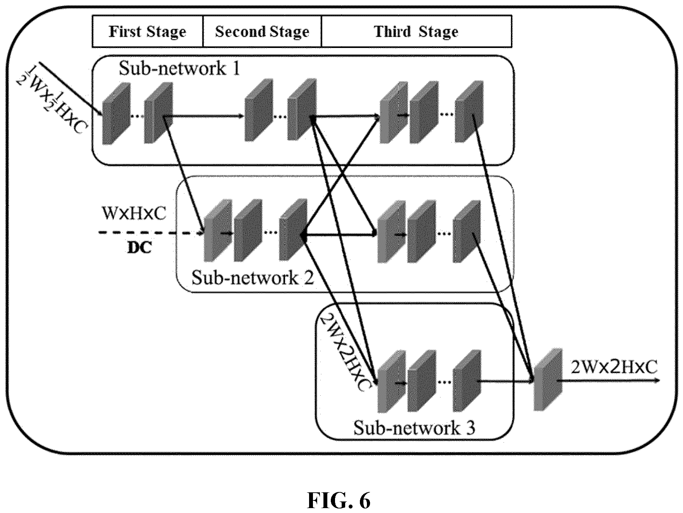

In B5, a deep feature extraction module, that is, multi-scale sub-networks $H_{DF}$, is provided with three sub-networks of different scales. The sub-networks of different scales from small scale to large scale are provided with five spatial attention residual dense connection blocks and several adaptive sub-network fusion modules, seven spatial attention residual dense connection blocks and several adaptive sub-network fusion modules, and three spatial attention residual dense connection blocks and several adaptive sub-network fusion modules, respectively. Referring to FIG. 6, a sub-network of a larger scale is added in every stage. The shallow feature $F_{sf}$ is down-sampled as a small-scale feature map by bilinear interpolation, so that the scale of the shallow feature is reduced to half of its original scale. The scale feature map is taken as the input of a first sub-network. Sub-networks having larger scales are gradually added in stages. The scale of each sub-network is twice that of the previous sub-network. The input of a sub-network in the current stage is formed by the output of different sub-networks in the previous stage through the scale amplification via the nearest neighbor interpolation and then the fusion via the adaptive sub-network fusion modules. The output of the first sub-network in a first stage is combined with the shallow feature to serve as the input of a second sub-network. $N_{sr}$ denotes a sub-network in a stage s, and the scale of an input feature map of the sub-network is $2^{r-1}$ times the scale of the first sub-network. The deep feature extraction module includes three sub-networks of different scales in parallel and may be expressed as below.

$$F_{sf} \quad \begin{array}{c} \nearrow \mathcal{N}_{11} \to \boxed{\mathcal{N}_{21}} \; \nearrow \; \mathcal{N}_{31} \\ \xrightarrow{\hspace{2cm}} \boxed{\mathcal{N}_{22}} \to \mathcal{N}_{32} \\ \searrow \; \mathcal{N}_{33.} \end{array}$$

Finally, a global low-frequency feature and a local high-frequency feature are extracted simultaneously through multiple sub-networks in parallel. Three features of different scales output from the three sub-networks are integrated through the adaptive sub-network fusion modules to output a deep feature fused with information with different frequencies. The formula is expressed as below.

$$F_{df} = H_{DF}(F_{sf})$$

In B6, the shallow feature $F_{sf}\uparrow$ after the twice up-sampling by the nearest neighbor interpolation is transmitted to the deep feature $F_{df}$ fused with the information with different frequencies by using a globally skip connection. Then pixels in a channel dimension is re-arranged to a spatial dimension to obtain a feature with specified amplification by using one sub-pixel convolution layer, where the number of channels is 64. The obtained up-sampling feature is $F_{up}$. This operation is denoted as $H_{up}$. The process may be expressed as below.

$$F_{up} = H_{up} \left( F_{df} + F_{sf} \uparrow \right)$$

In B7, the up-sampling feature $F_{up}$ is sent to a final re-establishment module. The re-establishment module uses a tanh activation function to normalize the feature and transfer the normalized feature to an 8-bit sRGB color space, which is denoted as $H_{REC}$. A 3-channel high-resolution image $I_{sr}$ is output from the feature map with 64 channels. The formula is expressed as follows: $I_{SR} = H_{REC} (F_{up})$.

In B8, a reverse convergence is performed on the re-established high-resolution image $I_{SR}$ and the backup high-resolution image samples by using a loss function to establish the image super-resolution model.

When p is 1, the loss function is L1. When p is 2, the loss function is L2. A loss function formula is as below.

$$L(\Theta) = \frac{1}{N} \times \sum_{i=1}^{N} \| H_{MARDN}(I_{LR}^{i}) - I_{HR}^{i} \|_p$$

$\Theta$ denotes a parameter set of a MARDN model. A learning rate is set. A gradient is reversely-propagated by minimizing a loss function error, so that network parameters are updated and iterated continuously until a network is trained to converge.

In an example, in reverse convergence training, a batch size is set to 16, and a learning rate is set to $10^{-4}$. In the process of iteration training, the learning rate is halved after every 100 cycles according to the convergence state of the network, thereby accelerating the training of the image super-resolution model. In this technical solution, an ADAM optimizer is used to perform reverse gradient propagation on the image super-resolution model. Parameters of the ADAM are set as that $\beta_1 = 0.9$, $\beta_2 = 0.999$ and $\varepsilon = 10^{-8}$. $L_1$ and $L_2$ loss functions are used to calculate an error between the high-resolution image $I_{SR}$ generated by the image resolution model and the original high-resolution image $I_{HR}$. The network parameters are reversely-propagated and updated by minimizing the error. After the network is trained to converge, $L_2$ is used to re-establish loss fine-tuning network parameters, further improving the performance of the image super-resolution model. The training cycles are 1000 in total.

A specific implementation of step C is as below.

Data set Set5, data set Set14, data set B100, data set Urban100, and data set Manga109 are acquired. Data sets contain multiple images with different color content.

A specific implementation of step D is as below.

For the to-be-restored data set Set5, data set Set14, data set B 100, data set Urban100, and data set Manga109, a single image from the data sets is input into the image super-resolution model trained in step B. The image super-resolution model trained in step B is used to perform super-resolution reconstruction on images from the data set Set5, data set Set14, data set B100, data set Urban100, and data set Manga109. The high-resolution image is output based on the image super-resolution model.

Above all, for the method and system for generating visual image enhancement, the apparatus and the storage medium that are provided in embodiments of the present invention, resolution processing is performed on the acquired to-be-processed low-resolution image by using the image training model established based on the preset loss function and the training samples including the high-resolution training samples and the low-resolution training samples. In this manner, the effect of restoring the high-resolution image from the low-resolution image is accurately and efficiently achieved, the feature extraction of the low-frequency and high-frequency information of the image from being processed simultaneously by using a single-scale convolution neural network is not needed, and the deficiency that a textured area is excessively smooth and has a poor visual effect is overcome.

As described above, the preceding embodiments are only used to explain technical solutions of the present invention and not to be construed as limitations thereto; though the present invention has been described in detail with reference to the preceding embodiments, those of ordinary skill in the art should understand that modifications can be made on technical solutions in the preceding embodiments or equivalent substitutions can be made on part of the features therein; and such modifications or substitutions do not make the corresponding technical solutions depart from the spirit and scope of technical solutions in embodiments of the present invention.

**Claims**

1. A method for generating visual image enhancement, comprising:

   acquiring a to-be-processed low-resolution image; and
   processing the low-resolution image through an image super-resolution model to output a high-resolution image, wherein a method for training the image super-resolution model comprises:

   collecting training samples, wherein the training samples comprise high-resolution image samples and low-resolution image samples; and collecting the training samples comprises: obtaining the high-resolution image samples through a random cutting method and backing up the high-resolution image samples, and down-sampling the high-resolution image samples through an image scaling algorithm to generate the low-resolution image samples; and
   establishing the image super-resolution model according to the collected training samples and based on a preset loss function and the high-resolution image samples.

2. The method for generating visual image enhancement according to claim 1, wherein establishing the image super-resolution model according to the collected training samples and based on the preset loss function and the high-resolution image samples comprises:

   acquiring a set number of low-resolution image samples of the generated low-resolution image samples;
   generating a shallow feature by extracting a feature from the low-resolution image based on a convolution layer;
   using spatial attention residual dense connection blocks to fuse the shallow feature and extract feature information with a specific frequency;
   fusing, based on adaptive sub-network fusion modules, all feature information with different frequencies extracted in a previous stage by the spatial attention residual dense connection blocks;
   combining, based on multi-scale sub-networks, the spatial attention residual dense connection blocks and the adaptive sub-network fusion modules to generate feature information of different scales, and outputting a deep feature fused with information with multiple frequencies;
   transmitting the shallow feature to the deep feature fused with the information with multiple frequencies by using a skip connection, and combining sub-pixel convolution to output an up-sampling feature;
   converting the up-sampling feature from a feature space to an sRGB color space by using the convolution layer to re-establish the high-resolution image; and
   performing a reverse convergence on the re-established high-resolution image and the backup high-resolution image samples based on the preset loss function to establish the image super-resolution model.

3. The method for generating visual image enhancement according to claim 2, wherein the multi-scale sub-networks are provided with three sub-networks of different scales; the sub-networks of different scales from small scale to large scale are provided with five spatial attention residual dense connection blocks and several adaptive sub-network fusion modules, seven spatial attention residual dense connection blocks and several adaptive sub-network fusion modules, and three spatial attention residual dense connection blocks separately and several adaptive sub-network fusion modules; and a spatial attention residual dense connection block of the spatial attention residual dense connection blocks is provided with three spatial attention residual dense connection units; and using the spatial attention residual dense connection blocks to fuse the shallow feature and extract the feature information with the specific frequency comprises:

   outputting, by the spatial attention residual dense connection units, a residual dense feature based on a dense connection and a residual connection;
   adaptively adjusting a weight in a spatial dimension based on a spatial attention mechanism, and spatially distinguishing high-frequency information of the residual dense feature and redundant low-frequency information of the residual dense feature; and
   accessing an input feature of the spatial attention residual dense connection units to an output feature of the spatial attention residual dense connection units by a partial skip connection to output the feature information with the specific frequency.

4. The method for generating visual image enhancement according to claim 3, wherein fusing, based on the adaptive sub-network fusion modules, all the feature information with the different frequencies extracted in the previous stage by the spatial attention residual dense connection blocks comprises:

using interpolation scaling to determine feature mapping having a same scale as required features and features of different scales;

adaptively determining a weight matrix through an attention mechanism according to the feature mapping; and dividing the weight matrix into weight components, and multiplying the weight components by the feature mapping to fuse the feature information with the different frequencies.

5. The method for generating visual image enhancement according to claim 4, wherein combining, based on the multi-scale sub-networks, the spatial attention residual dense connection blocks and the adaptive sub-network fusion modules to generate the feature information of the different scales, and outputting the deep feature fused with the information with the multiple frequencies comprises:

outputting, a small-scale low-frequency feature by processing a small-scale feature obtained by down-sampling the shallow feature through three stages;

fusing, by the adaptive sub-network fusion modules, the shallow feature and an output of one of the sub-networks in the first stage, and outputting a frequency feature having a same scale as the shallow feature through fusion in two stages;

combining outputs of the sub-networks in the second stage to output a large-scale high-frequency feature through fusion in one stage; and

fusing, by the adaptive sub-network fusion modules, three features of different scales to output a deep feature that has a same scale as a largest-scale feature and is fused with information with different frequencies.

6. A system for generating visual image enhancement, comprising:

an acquisition module configured to acquire a to-be-processed low-resolution image;

an output module configured to process the low-resolution image through an image super-resolution model to output a re-established high-resolution image, wherein the image super-resolution model is based on high-resolution image samples and low-resolution image samples; and

a training module configured to train the image super-resolution model and comprising:

a sampling sub-module configured to collect training samples, wherein the training samples comprise high-resolution image samples and low-resolution image samples; and the sampling sub-module comprises a first sampling unit and a second sampling unit, wherein the first sampling unit is configured to obtain the high-resolution image samples through a random cutting method and back up the high-resolution image samples, and the second sampling unit is configured to down-sample the high-resolution image samples through an image scaling algorithm to generate the low-resolution image samples; and

a model establishment sub-module configured to establish the image super-resolution model according to the collected training samples and based on a preset loss function and the high-resolution image samples.

7. An apparatus, comprising:

a memory configured to store at least one program; and

a processor configured to execute the at least one program to perform the method according to any one of claims 1 to 5.

8. A storage medium for storing an executable program, wherein when the executable program is executed by a processor, the method according to any one of claims 1 to 5 is performed.

Collect training samples, where the training samples include high-resolution image samples and low-resolution image samples /S3

Acquire a to-be-processed low-resolution image / S1

Establish the image super-resolution model according to the collected training samples and based on a preset loss function and the high-resolution image samples /S4

Process the low-resolution image through an image super-resolution model to output a high-resolution image /S2

**FIG. 1**

Acquisition module

Output module

Training module

Sampling sub-module

Model establishment sub-module

**FIG. 2**

| Shallow feature extraction module | Deep feature extraction module | Up-sampling module | Re-establishment module |

FIG. 3

**FIG. 4**

FIG. 5

**FIG. 6**

## INTERNATIONAL SEARCH REPORT

| International application No. |
| --- |
| **PCT/CN2021/120171** |

**A.    CLASSIFICATION OF SUBJECT MATTER**

G06T 3/40(2006.01)i

According to International Patent Classification (IPC) or to both national classification and IPC

**B.    FIELDS SEARCHED**

Minimum documentation searched (classification system followed by classification symbols)

G06T;G06K;G06N

Documentation searched other than minimum documentation to the extent that such documents are included in the fields searched

Electronic data base consulted during the international search (name of data base and, where practicable, search terms used)

USTXT; DWPI; SIPOABS; CNKI; CNABS; CNTXT: 高分辨率, 低分辨率, 超分辨率, 重建, 损失函数, 采样, 训练, super resolution, high resolution, low resolution, loss function, sampling, training, reconstruction

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 113066013 A (OPT MACHIINE VISION TECH CO., LTD.) 02 July 2021 (2021-07-02) claims 1-8 | 1-8 |
| X | CN 111583112 A (SOUTH CHINA UNIVERSITY OF TECHNOLOGY) 25 August 2020 (2020-08-25) description, paragraphs [0002]-[0213] | 1, 6-8 |
| A | CN 112767251 A (CHONGQING UNIVERSITY OF POSTS AND TELECOMMUNICATIONS) 07 May 2021 (2021-05-07) entire document | 1-8 |
| A | US 2020364830 A1 (HERE GLOBAL BV) 19 November 2020 (2020-11-19) entire document | 1-8 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 December 2021** | **17 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/120171**

| Patent document cited in search report | | | Publication date (day/month/year) | Patent family member(s) | | | Publication date (day/month/year) |
|---|---|---|---|---|---|---|---|
| CN | 113066013 | A | 02 July 2021 | None | | | |
| CN | 111583112 | A | 25 August 2020 | None | | | |
| CN | 112767251 | A | 07 May 2021 | None | | | |
| US | 2020364830 | A1 | 19 November 2020 | EP | 3742387 | A1 | 25 November 2020 |

Form PCT/ISA/210 (patent family annex) (January 2015)

**REFERENCES CITED IN THE DESCRIPTION**

**Patent documents cited in the description**

- CN 202110541938